# EUROPEAN PATENT APPLICATION

(11) **EP 1 884 598 A1**
(43) Date of publication of application: **06.02.2008**
(21) Application number: 06016261.7
(22) Date of filing: 03.08.2006
(51) Int. Cl.: E02B 17/00

(54) **Offshore foundation**

(71) Applicant: SIEMENS AKTIENGESELLSCHAFT, 80333 München (DE)
(72) Inventor: Stiesdal, Henrik, 5000 Odense C (DK)

(57) **Abstract**

An offshore foundation (1), e.g. for windmills, at a site in a seabed (4), where a pile (2,2') is provided and rammed down into the seabed (4), so that the pile (2,2') extends to a predetermined depth below the surface of the seabed (4), where the pile (2,2') is provided substantially shorter than the sum of the depth of the sea at the site and the distance with which the pile extends below the surface of the seabed (4), wherein the pile (2,2') is rammed into the seabed (4) until only an upper part of the pile (2,2') extends over the seabed (4) and so that the length of the upper part of the pile (2,2') extending over the seabed (4) is considerably less than the depth of the sea at the site in order thereby to provide a foundation stub for a superstructure (7,7'), where a superstructure (7,7') is provided and fastened on top of the pile (2,2') to provide the offshore foundation (1) substantially as a combination of the superstructure (7,7') and the pile (2,2').

## Description

### Field of the Invention

The present invention concerns an offshore foundation, e.g. for windmills.

### Background of the Invention

Offshore foundations for e.g. windmills are generally large expensive constructions. In order to avoid the complicated process of ramming down foundations into the seabed, gravitational foundations resting on the seabed are used to a certain extent. If the seabed is not even, there is a need for smoothing and levelling the seabed before placing the gravitational foundation. Such levelling is, however, only possible in practice by relatively shallow depths at sea, and is not applied at depths of the sea more than, for example, 30 meters or more. Besides, gravitational foundations are not very suited for sandy seabeds, as the presence of the gravitational foundations may change the flow conditions and cause formation of trenches or ditches by eroding the bed around the foundation, consequently undermining the foundation. Gravitational foundations are thus only suited for seabeds where the risk of erosion is negligible, e.g. on a bed of moraine clay or chalk.

At sites with risk of erosion that render gravitational foundations unsuitable, foundations anchored in the seabed are used, e.g. by providing a relatively long pile in the bed. At depths of 30 m or more, mono-piles are typically used, which are rammed down into the bed to a depth of 20 - 30 m below the level of the seabed. Such piles are to be very stable, and typically iron piles with a diameter of 4-5 m are used. With a typical material thickness of 150 mm and a total length of 60 m, the weight is of the magnitude 150 tons. This means that the inertia is very large, and consequently a very heavy hammer is to be applied for ramming these piles down into the underground. The equipment and the procedure for ramming a pile into the seabed is thus a costly and difficult process, which may be further complicated by bad weather when a 60 m long pile is to be handled in a rough sea.

However, it would be desirable if there were methods with which the process of establishing offshore foundations could be facilitated.

### Description of the Invention

It is therefore an object of the invention to provide a method for establishing an offshore foundation without the above drawbacks.

This object can be achieved by a method for establishing an offshore foundation of the kind specified in the preamble of claim, and which is peculiar in that the pile is provided substantially shorter than the sum of the depth of the sea at the site and the distance with which the pile extends below the surface of the seabed, wherein the pile is rammed into the seabed until only an upper part of the pile extends over the seabed and so that the length of the upper part of the pile extending over the seabed is considerably less than the depth of the sea at the site in order thereby to provide a foundation stub for a superstructure, where a superstructure is provided and fastened on top of the pile to provide the offshore foundation as a combination of the superstructure and the pile.

By this method is avoided using mono-piles more than 60 m long, as the foundation is divided into parts with reduced length. A lower part, namely the pile, has largely a length corresponding to the depth at which it is rammed into the seabed, whereas a top part, the superstructure, has substantially a length corresponding to the depth of the sea. Such parts are far easier to handle than the long mono-piles. This furthermore entails that the equipment applied for ramming the pile can be made smaller due to the less inertia of the pile and due to the fact that the pile is not so long. Since the load on the pile during erection is less due to less inertia and less impact load applied on the pile, the pile can be made lighter. All together, the invention thus entails a considerable saving of material in the pile and the entire foundation as well as in ramming equipment.

The fastening of the superstructure to the pile may, for example, be provided by flanges at the bottom of the superstructure and the top of the pile, respectively, as the flanges are interconnected by screw bolts. In any case, the pile and the superstructure forming part of the inventive offshore foundation each have a coupling part for interconnecting the pile and the superstructure, e.g. end to end.

The offshore foundation established by the method according to the invention is peculiar in that the offshore foundation is substantially a combination of the pile and a superstructure fastened on a foundation stub on top of the pile, where the foundation stub and the superstructure are each provided with a coupling part for interconnecting the foundation stub and the superstructure, where the two coupling parts are a male and a female part, respectively, where the female part is adapted for accommodating the male part.

One of either the foundation stub or the superstructure may be provided with a conical or frustoconical projection, and the other may be provided with a guideway with a corresponding conical or frustoconical aperture for receiving the conical projection. During the lowering of the superstructure onto the foundation stub, sand from the seabed may accumulate between the conical projection and conical aperture. This sand may be desirable in some cases, as it will act as friction-enhancing means so that the superstructure somehow grinds or frets itself onto the foundation stub; this action provides a passive fastening.

It is preferred that the foundation stub is provided with a male part, and that the superstructure is provided with an aperture interacting therewith for receiving the male part. The cross-section of the superstructure around the guideway may e.g. be substantially larger than the cross-section of the uppermost part of the pile. After lowering the superstructure upon the stub, a wide base with high stability is thereby achieved.

The pile may be made of concrete and made tapering or pointed for penetrating the underground below the seabed. Concrete has advantageously strength which substantially will prevent the pile from breaking when it is rammed into the seabed. A minor damage to the pointed end may, however, be acceptable when the pile is rammed down into the underground. The demands on the concrete are thus not very great. As opposed to piles of steel, which is also a possible material for the pile according to the invention, piles of concrete are cheaper to make.

The superstructure may e.g. be made of iron, steel or concrete. By the latter alternative, it may be advantageous with regard to stability that the guideway around the aperture is made of iron or steel.

In order to minimise the load on the superstructure caused by wave action, the superstructure may have a narrowed cross-section at sea level.

### Short Description of the Drawing

The invention is explained in more detail in the following with reference to the drawing, where
- Fig. 1: shows a schematic drawing of a possible embodiment of the invention;
- Fig. 2: shows an alternative embodiment.

### Description of Preferred Embodiments

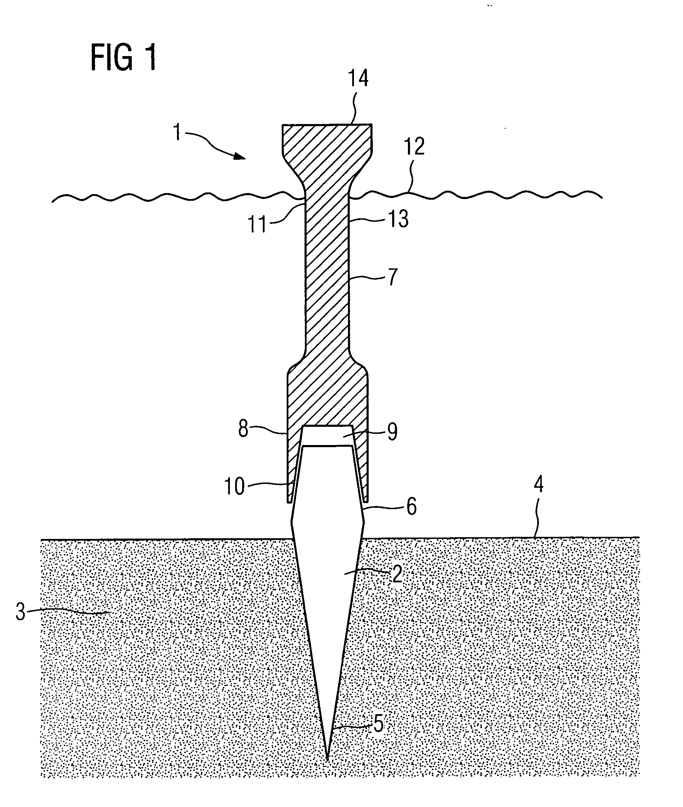

On Fig. 1 is shown a possible embodiment of the invention, where the ratios of dimensions, however, do not correspond to reality but are modified for the sake of illustration. The shown foundation 1 includes a pile 2 which is lowered into the underground 3 of the seabed 4. In order that the pile 2 may be rammed down into the underground 3 of the seabed 4, the pile 2 is provided with a tapered or pointed end 5. The uppermost part of the pile 2 includes a frustoconical section 6 projecting up from the seabed 4.

A superstructure 7 includes a lower section 8 which is provided with an aperture 9 for receiving the frustoconical projection 6 of the pile 2. The inner wall of the aperture 9 is provided as a guideway 10 of metal, preferably iron, in order to provide good connection with the tapering end 6 of the pile 2, which is e.g. made of concrete.

The cross-section of the lower section 8 of the superstructure 7 is significantly wider than the width of the upper part of the pile 2. The lower section 8 of the superstructure 7 thus has high stability and may additionally bear on the seabed 4.

In order to be less influenced by transverse wave forces, the superstructure 7 may be provided with a narrowed part 13 at the section 11 located at the surface of the sea 12, and where a supporting platform 14 for e.g. a windmill is resting on top of the narrow part 13.

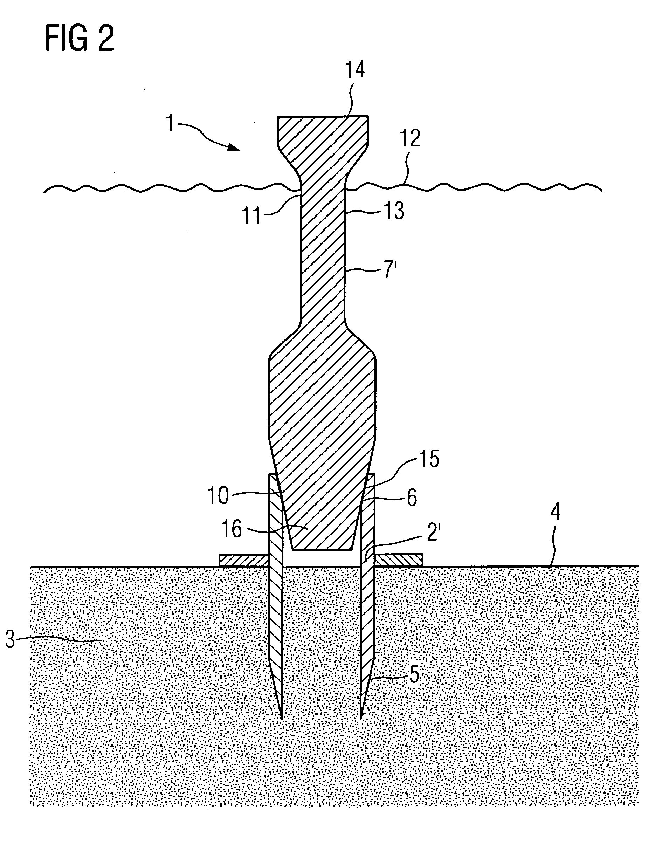

Fig. 2 shows an alternative embodiment where the pile 2' is provided with a conical aperture 15 for accommodating the frustoconical projection 16 of the superstructure 7'. For the sake of stability, the pile 2' may be provided with a collar 17 that may bear on the seabed. The collar 17 acts as reinforcement to prevent the pile 2' from breaking under the load applied when the superstructure is lowered into the aperture 15 of the pile 2'.

## Claims

1. A method for constructing an offshore foundation (1), e.g. for windmills, at a site in a seabed (4), where a pile(2,2') is provided and rammed down into the seabed(4), so that the pile (2,2') extends to a predetermined depth below the surface of the seabed (4),
**characterised in that** the pile (2,2') is provided substantially shorter than the sum of the depth of the sea (12) at the site and the distance with which the pile (2,2') extends below the surface of the seabed (4), wherein the pile (2,2') is rammed into the seabed (4) until only an upper part of the pile (2,2') extends over the seabed (4) and so that the length of the upper part of the pile (2,2') extending over the seabed (4) is considerably less than the depth of the sea (12) at the site in order thereby to provide a foundation stub for a superstructure (7,7'), where a superstructure (7,7') is provided and fastened on top of the pile to provide the offshore foundation (1) substantially as a combination of the superstructure (7,7') and the pile (2,2').

2. An offshore foundation (1), e.g. for windmills, constructed according to the method according to claim 1, including a pile (2,2') rammed down into the seabed (4),
**characterised in that** the offshore foundation (1) is substantially a combination of the pile (2,2') and a superstructure (7,7') fastened on a foundation stub on top of the pile (2,2'), where the foundation stub and the superstructure (7,7') are each provided with a coupling part for interconnecting the foundation stub and the superstructure, where the two coupling parts are a male and a female part, respectively, where the female part is adapted for accommodating the male part.

3. Offshore foundation (1) according to claim 2,
**characterised in that** one of either the foundation stub or the superstructure is provided with a conical or frustoconical projection (16), and that the other is provided with a guideway (10) with a corresponding conical or frustoconical aperture (9,15) for receiving the conical projection.

4. Offshore foundation (1) according to claim 2 or 3,
**characterised in that** the stub is provided with a male part, and that the superstructure (7) is provided with an aperture (9) interacting therewith for receiving the male part.

5. Offshore foundation (1) according to any of claims 3 or 4,
**characterised in that** the cross-section of the superstructure (7,7') around the guideway is substantially greater than the cross-section of the foundation stub.

6. Offshore foundation (1) according to any of claims 2 - 5,
**characterised in that** the pile (2,2') is made of concrete.

7. Offshore foundation (1) according to claim 6,
**characterised in that** the pile (2,2') is pointed or tapering for penetrating the underground below the seabed (4), and that the concrete has a strength preventing breakage of the pile (2,2') when the latter is rammed into the seabed(4).

8. Offshore foundation (1) according to any of claims 3 - 7,
**characterised in that** the guideway (10) around the opening is made of iron or steel.

9. Offshore foundation according to any of claims 2 - 9,
**characterised in that** the superstructure (7,7')) is provided with narrow cross-section at sea level (12).

10. Use of an offshore foundation (1) according to any of claims 2 - 9 for providing a foundation for a windmill.

11. Method according to claim 1 applied to a construction of an offshore foundation (1) of a windmill.
